# EUROPEAN PATENT APPLICATION

(11) **EP 1 258 619 A2**
(43) Date of publication of application: **20.11.2002**
(21) Application number: 02011056.5
(22) Date of filing: 17.05.2002
(51) Int. Cl.: F02D 17/02

(54) **Multi-cylinder engine and method for controlling a number of operating cylinders of a multi-cylinder engine**

(30) Priority: 18.05.2001 JP 2001149036
(71) Applicant: YAMAHA HATSUDOKI KABUSHIKI KAISHA, Iwata-shi Shizuoka-ken (JP)
(72) Inventor: Nishigaki, Masato, Iwata-shi, Shizuoka-ken (JP)
(74) Representative: Grünecker, Kinkeldey, Stockmair & Schwanhäusser Anwaltssozietät

(57) **Abstract**

Multi-cylinder engine and method for controlling a number of operating cylinders of a multi-cylinder engine, wherein fuel is injected by injectors and air intake control is performed by an electronic throttle valve or an idle speed control device. The number of operating cylinders is controlled according to an operating condition, and part of cylinders are rested. Fuel is injected directly into the cylinders by means of said injectors and fuel supply and ignition to the resting cylinders are stopped.

## Description

This invention relates to a multi-cylinder engine comprising a plurality of cylinders, injectors for fuel injection and an electronic throttle or an idle speed control device for air intake control, wherein a number of operating cylinders of said plurality of cylinders is controllable according to an operating condition and part of said plurality of cylinders are rested, and to a method for controlling a number of operating cylinders of a multi-cylinder engine, wherein fuel is injected by injectors and air intake control is performed by an electronic throttle valve or an idle speed control device, and wherein the number of operating cylinders is controlled according to an operating condition, and part of cylinders are rested.

Various kinds of number-of-cylinders controlling engines are suggested as multi-cylinder engines for motor vehicles or the like, in which part of cylinders are rested for the purpose of improving fuel consumption and the exhaust gas characteristic (for example, see Japanese JP-6-17655B and JP-2976766C).

In such number-of-cylinders controlling engines, a system is adopted in which cylinders are rested under a predetermined condition and drive of intake and exhaust valves is also stopped for the resting cylinders.

However, if a system is adopted in which drive of intake and exhaust valves is also stopped for the resting cylinders, as described above, problem is raised that this results in a complicated valve drive mechanism.

Then, an idea is possible of stopping fuel supply and ignition to the resting cylinders. If a PFI (port fuel injection) system, for example, is adopted for this idea, however, since fuel which has stuck on the ports is discharged over several cycles even after the fuel supply has been stopped, HC components in the exhaust gas are increased, worsening the exhaust gas characteristic.

In addition, if cylinders are rested, the temperature of catalysts disposed in the exhaust passages of the resting cylinders falls and the function of the catalysts is not fulfilled sufficiently, worsening purification efficiency of the exhaust gas. Further, if the cylinders are rested only by stoppage of fuel supply and ignition, without suspension of operations of intake and exhaust valves, catalysts produce excessive oxygen when the exhaust passages of the resting and the working cylinders are connected to the same catalysts, resulting in a remarkable drop in purification capacity of the catalysts.

It is an object of this invention to provide a multi-cylinder engine and a method for controlling a number of operating cylinders of a multi-cylinder engine as indicated above, wherein the fuel consumption ratio is low.

According to the apparatus aspect of the present invention, said object is solved by a multi-cylinder engine comprising a plurality of cylinders, injectors for fuel injection and an electronic throttle or an idle speed control device for air intake control, wherein a number of operating cylinders of said plurality of cylinders is controllable according to an operating condition and part of said plurality of cylinders are rested, characterized by a direct injection system adapted to directly inject fuel into the cylinders by means of said injectors and a system for stopping fuel supply and ignition to the resting cylinders.

Preferably, the plurality of cylinders is divided into at least two groups of cylinders, wherein one cylinder group, an operating cylinder group, is operated and the respective other cylinder group, a resting cylinder group, is rested, wherein exhaust passages of the cylinders included in each of said group of cylinders are collected together, and wherein at least one catalyst is disposed downstream of the collected exhaust portions, respectively.

Preferably, said multi-cylinder engine is a V-type multi-cylinder engine, in particular a V-type eight-cylinder, V-type ten-cylinder or V-type twelve-cylinder engine, wherein fuel supply and ignition to the resting cylinders are performed for each bank of the V-type multi-cylinder engine.

Preferably, the multi-cylinder engine is adapted to alternately switch between said groups of cylinders, wherein the cylinders of the operating cylinder group and the cylinders of the resting cylinder group are interchanged.

Preferably, the cylinders of the operating cylinder group are operated for a predetermined time after a switching instruction of the operating and the resting cylinder group is outputted.

Preferably, the multi-cylinder engine comprises a engine control unit, wherein said engine control unit is adapted to control the electronic throttle based on an O₂-concentration in an exhaust gas to adjust an amount of intake air and/or to control the number of operating cylinders.

Preferably, the operating condition is the low load operating area.

According to the method aspect of the present invention, said object is solved by a method for controlling a number of operating cylinders of a multi-cylinder engine, wherein fuel is injected by injectors and air intake control is performed by an electronic throttle valve or an idle speed control device, and wherein the number of operating cylinders is controlled according to an operating condition, and part of cylinders are rested, wherein fuel is injected directly into the cylinders by means of said injectors and fuel supply and ignition to the resting cylinders are stopped.

Preferably, exhaust gas of the operating cylinders and exhaust gas of the rested cylinders are independently collected by means of respective exhaust passages and provided to separate catalysts, respectively.

Preferably, the operating cylinders and the rested cylinders are alternately switched, wherein operating cylinders are operated for a predetermined time after a switching instruction of the working and the resting cylinder group is outputted.

It is an advantage of the present invention to provide a multi-cylinder engine and a method for controlling a number of operating cylinders of a multi-cylinder engine capable of improving the fuel consumption ratio while effecting simplification of a valve drive mechanism as well as prevention of worsening of the exhaust gas characteristic.

It is further an advantage of the present invention to provide a multi-cylinder engine and a method for controlling a number of operating cylinders of a multi-cylinder engine capable of preventing a drop in purification efficiency of the exhaust gas associated with the decreased temperature of catalysts and excessive oxygen.

Preferred embodiments of the present invention are laid down in the dependent claims.

In the following, the present invention is explained in greater detail with respect to several embodiments thereof in conjunction with the accompanying drawings, wherein:
- Fig. 1: is a block diagram, showing the basic structure of a number-of-cylinders controlling engine 1 according to a first embodiment;
- Fig. 2: is a schematic plan view of the number-of-cylinders controlling engine 1 according to the first embodiment;
- Fig. 3: is a block diagram, showing the basic structure of a number-of-cylinders controlling engine 1 according to a variation of the first embodiment;
- Fig. 4: is a schematic plan view of a number-of-cylinders controlling engine 1 according to a second embodiment;
- Fig. 5: is a schematic plan view of a number-of-cylinders controlling engine 1 according to a third embodiment; and
- Fig. 6: is a schematic plan view of a number-of-cylinders controlling engine 1 according to a fourth embodiment.

### First Embodiment

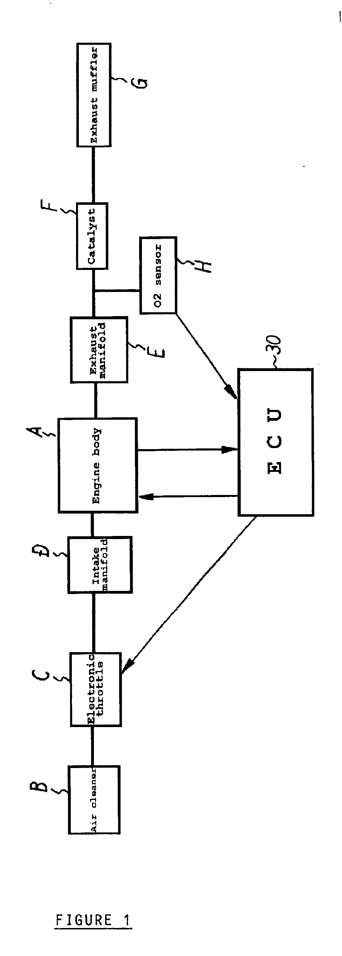

Fig. 1 is a block diagram showing the basic structure of a number-of-cylinders controlling engine 1 according to a first embodiment; to the intake side of a body A of the number-of-cylinders controlling engine 1 are connected an air cleaner B, an electronic throttle C and an intake manifold D; and to an exhaust manifold E extending from the exhaust side are connected a catalyst F and an exhaust muffler G.

Downstream of the exhaust manifold E is attached a sensor H; the data of O₂ concentration in the exhaust gas detected by the O₂ sensor H is sent to an ECU (engine control unit) 30; and the ECU 30 controls the electronic throttle based on the O₂ concentration to adjust the amount of intake air, so that the air-fuel ratio (A/F) of the mixture supplied to the engine body A is controlled to a predetermined value.

The number-of-cylinders controlling engine 1 is an engine (multi-cylinder engine) in which the number of working cylinders is controlled according to the operating condition, and part of cylinders are rested during low load running so as to improve the fuel consumption ratio and the exhaust gas characteristic, control of the number of working cylinders being performed by the ECU 30.

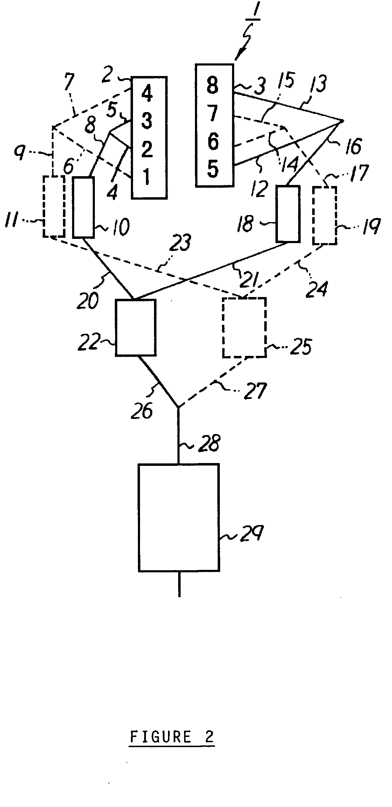

Now, referring to the schematic plan view of Fig. 2, the construction of the number-of-cylinders controlling engine 1 according to the first embodiment is specifically described.

The number-of-cylinders controlling engine 1 according to this embodiment is a V-type eight-cylinder engine (V-8 engine) for a motor vehicle, having longitudinally disposed right and left banks 2, 3 in the shape of V, each provided with four cylinders in the longitudinal direction of the vehicle body (vertically in Fig. 1). Here, the cylinders are numbered (1)-(8) as shown in the figure, the cylinders on the left bank 2 being numbered (1)-(4) and the cylinders on the right bank 3 being numbered (5)-(8). In this V-type eight-cylinder engine 1, ignition for the cylinders is performed in order of cylinder numbers of (1-3-7-2-6-5-4-8).

In the V-type eight-cylinder engine according to this embodiment, while fuel injection by injectors and intake control by an electronic throttle are adopted, a direct injection system is adopted as the fuel injection system, in which fuel is injected directly into cylinders by injectors.

Also, in the V-type eight-cylinder engine 1 according to this embodiment, while the number of working cylinders is controlled according to the operating condition, and part (half: four in this embodiment) of cylinders are rested in a low load operating area, this suspension of cylinder operations is performed by stopping fuel supply and ignition to the resting cylinders. In this case, the valve drive mechanisms of all the cylinders including the resting cylinders are driven as usual, so that intake and exhaust valves are driven to be opened/closed as usual.

In this embodiment, a system is adopted in which the whole cylinders are divided into a working cylinder group and a resting cylinder group, and exhaust pipes of the cylinders included in each cylinder group are collected together. Here, while the working and the resting cylinder group are switched alternately at a predetermined timing, all the cylinders are operated for a predetermined time after a switching instruction of the working and the resting cylinder group is outputted. That is, when the switching instruction of the working and the resting cylinder group is outputted, cylinders which has been in the resting cylinder group up to now are operated and cylinders which has been in the working cylinder group up to now are rested.

Specifically, the whole cylinders are divided into two cylinder groups of the cylinders (1), (7), (6), (4) and the cylinders (3), (2), (5), (8), and during low load running, either one of the cylinder groups are rested and the other cylinder group are operated.

That is, during low load running, resting cylinders are selected two for each of the right and left banks 2, 3; if one cylinder group of the cylinders (1), (7), (6), (4) is a resting one, fuel supply and ignition to the resting cylinders (1), (7), (6), (4) is stopped, while fuel is supplied from injectors to the other cylinder group of the cylinders (3), (2), (5), (8) as a resting cylinder group; and ignition is performed in order of cylinder numbers of (3-2-5-8), and two cylinders (3), (2) and two cylinders (5), (8) are operated for the right and left banks 2, 3, respectively.

On the contrary, if the cylinder group of the cylinders (3), (2), (5), (8) is a resting one, fuel supply and ignition to the resting cylinders (3), (2), (5), (8) is stopped, while fuel is supplied from injectors to the other cylinder group of the cylinders (1), (7), (6), (4) as a resting cylinder group; and ignition is performed in order of cylinder numbers of (1-7-6-4), and two cylinders (1), (4) and two cylinders (6), (7) are operated for the right and left banks 2, 3, respectively.

In this embodiment, exhaust pipes of the cylinders included in each cylinder group are collected together, as described above. That is, for the left bank 2, the exhaust pipes 4, 5 of the cylinders (2), (3) and the exhaust pipes 6, 7 of the cylinders (1), (4) are collected together to be connected to exhaust pipes 8 and 9, respectively, and downstream of the collected portions are disposed catalysts 10, 11, respectively.

Similarly, for the right bank 3, the exhaust pipes 12, 13 of the cylinders (5), (8) and the exhaust pipes 14, 15 of the cylinders (6), (7) are collected together to be connected to exhaust pipes 16 and 17, respectively, and downstream of the collected portions are disposed catalysts 18, 19, respectively.

Further, exhaust pipes extending from the catalysts provided downstream of the collected portions of the cylinders included in the cylinder groups are also collected to be connected to other catalysts. That is, exhaust pipes 20, 21 extending from the catalysts 10, 18 are joined together to be connected to a catalyst 22, and exhaust pipes 23, 24 extending from the catalysts 11, 19 are joined together to be connected to a catalyst 25; and exhaust pipes 26, 27 extending from the catalysts 22, 25 are collected together to be connected to one exhaust pipe 28, to which is connected an exhaust muffler 29.

Therefore, if one cylinder group of the cylinders (1), (7), (6), (4) are rested during low load running, the other cylinder group of the cylinders (3), (2), (5), (8) are operated; exhaust gas discharged from the cylinders (3), (2), (5), (8) in operation passes through the exhaust pipes 4, 5 and 12, 13 to be collected into exhaust pipes 8 and 16, respectively, and then passes through the catalysts 10, 18 to be purified; further, it passes through the exhaust pipes 20, 21 to be collected and through the catalyst 22 for further purification; and thereafter, it flows through the exhaust pipes 26, 28 into the exhaust muffler 29 and discharged finally to the atmosphere.

On the contrary, the other cylinder group of the cylinders (3), (2), (5), (8) are rested, the cylinder group of the cylinders (1), (7), (6), (4) are operated; exhaust gas discharged from the cylinders (1), (7), (6), (4) in operation passes through the exhaust pipes 6, 7 and 14, 15 to be collected into exhaust pipes 9 and 16, respectively, and then passes through the catalysts 11, 19 to be purified; further, it passes through the exhaust pipes 23, 24 to be collected and through the catalyst 25 for further purification; and thereafter, it flows through the exhaust pipes 27, 28 into the exhaust muffler 29 and discharged finally to the atmosphere.

In this way, all the exhaust gas discharged from the four cylinders (3), (2), (5), (8) or (1), (7), (6), (4) operated during low load running, are collected and passes through the catalysts 10, 18, 22 or 11, 19, 25 connected to the four cylinders, so that temperature decrease and the condition of excessive oxygen of the catalysts 10, 18, 22 or 11, 19, 25 through which the exhaust gas passes, are prevented and these catalysts 10, 18, 22 or 11, 19, 25 fulfill their inherent function sufficiently, providing a high purification efficiency of the exhaust gas.

As described above, in the V-type eight-cylinder engine 1 according to this embodiment, a system to stop fuel supply and ignition to the resting cylinders is adopted as the number-of-cylinders controlling system. Therefore, valve drive mechanisms of the resting cylinders need not be stopped, so that their control mechanism is dispensed with, improving the fuel consumption ratio of the whole engine 1, as well as effecting simplification of the valve drive mechanisms. That is, in a multi-cylinder engine, if part of cylinders are rested during low load running, as in this embodiment, throttle valves are opened relatively wide compared to when all the cylinders are operated to compensate for the power drop due to resting cylinders, so that intake resistance is decreased and pumping loss of the working cylinders is reduced, resulting in an improvement in the fuel consumption ratio of the whole engine.

In addition, a direct injection system is adopted as the fuel injection system, so that no fuel sticks on the ports of the resting cylinders, preventing worsening of the exhaust gas characteristic associated with fuel discharge.

Further, in this embodiment, a direct injection system and an electronic throttle C (see Fig. 1) are combined, so that operation can be switched instantly between a state in which part of cylinders are rested and a state in which all the cylinders are rested. In the case of the switching of the state in which part of cylinders are rested and the state in which all the cylinders are rested, engine output usually decreases abruptly, but control of the electronic throttle C by the ECU 30 prevents abrupt change in engine output, providing a smooth switching. As a result, change in engine condition which is not expected by the driver, is mitigated, effecting improvement of the driving feeling and safety of the driver.

In addition, in this embodiment, a working cylinder group and a resting cylinder group are switched alternately, so that the thermal expansion difference in the whole engine 1 is eliminated, enhancing durability of the engine 1. In this case, all the cylinders are operated for a predetermined time after a switching instruction of the working and the resting cylinder group is outputted, shocks associated with the torque change at the time of switching are decreased to a minimum, preventing a drop in drivability of the motor vehicle.

Further, if the working cylinder group and the resting cylinder group are switched such that the temperature of the catalyst on the resting cylinder side does not fall excessively, worsening of the exhaust gas characteristic can be prevented when the resting cylinders are operated.

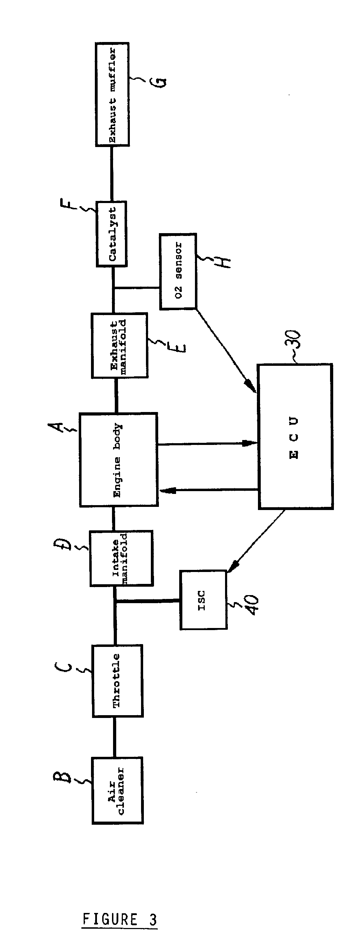

While in this embodiment, an electronic throttle C is adopted as a means of controlling the amount of intake air, the state in which part of cylinders are rested and the state in which all the cylinders are rested can also be switched smoothly with a large capacity ISC (idle speed control device) 40, as shown in Fig. 3.

### Second Embodiment

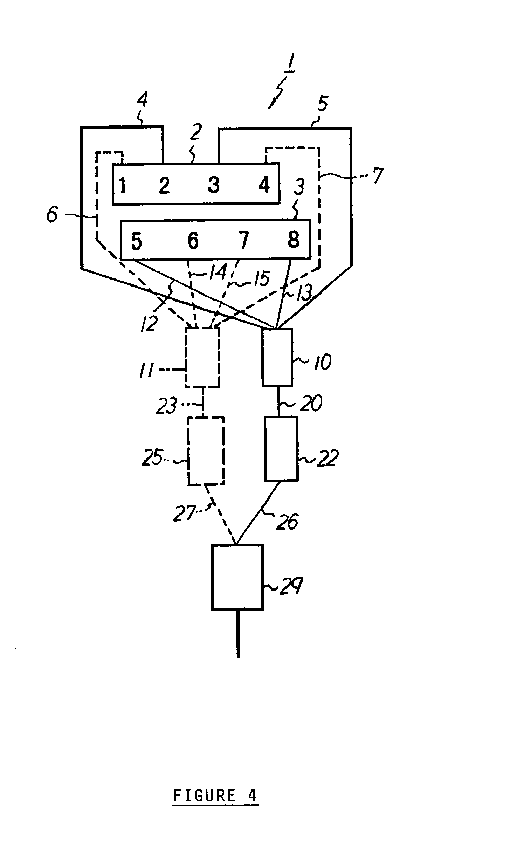

Now, referring to Fig. 4, a second embodiment will be described. Fig. 4 is a schematic plan view of a number-of-cylinders controlling engine according to the second embodiment, and like elements as shown in Fig. 2 are designated by like reference numerals.

The number-of-cylinders controlling engine 1 according to this embodiment is a V-type eight-cylinder engine (V-8 engine) for a motor vehicle, as in the foregoing embodiment 1, but the engine 1 according to this embodiment is a laterally disposed engine, having basically the same construction as the engine 1 according to the first embodiment, except that it has laterally disposed front and rear banks 2, 3 in the shape of V.

Here, on each of the front and rear banks 2, 3 are provided four cylinders in the lateral direction of the vehicle body (horizontally in Fig. 4), the cylinders on the front bank 2 being numbered (1)-(4) and the cylinders on the rear bank being numbered (5)-(8). In this V-type eight-cylinder engine, ignition for the cylinders is performed in order of cylinder numbers of (1-3-7-2-6-5-4-8) as in the foregoing embodiment.

In the V-type eight-cylinder engine 1 according to this embodiment, like the first embodiment, a system is adopted in which the whole cylinders are divided into a working cylinder group and a resting cylinder group, exhaust pipes of the cylinders included in each cylinder group are collected together, and downstream of the collected portion are disposed catalysts.

That is, exhaust pipes 4, 5 of the cylinders (2), (3) on the front bank 2 and exhaust pipes 12, 13 of the cylinders (5), (8) on the rear bank 3, are collected together to be connected to a catalyst 10; to an exhaust pipe 20 from the catalyst 10 is connected another catalyst 22; and an exhaust pipe 26 extending from the catalyst 22 is connected to an exhaust muffler 29.

Likewise, exhaust pipes 6, 7 of the cylinders (1), (4) on the front bank 2 and exhaust pipes 14, 15 of the cylinders (6), (7) on the rear bank 3, are collected together to be connected to a catalyst 11; to an exhaust pipe 23 from the catalyst 11 is connected a catalyst 25; and an exhaust pipe 27 extending from the catalyst 25 is connected to an exhaust muffler 29.

Therefore, the basic construction of the V-type eight-cylinder engine 1 according to this embodiment is the same as that of the foregoing first embodiment, so that the same effect as in the first embodiment can be achieved also in this embodiment.

### Third Embodiment

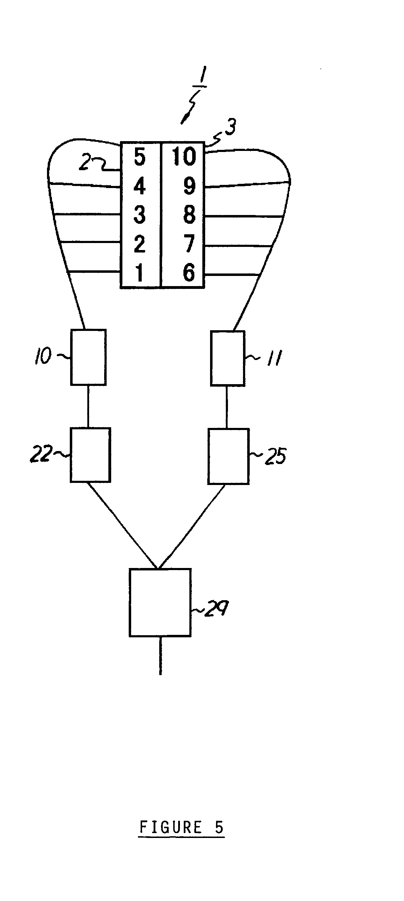

Now, referring to the schematic plan view of Fig. 5, a third embodiment will be described.

The number-of-cylinders controlling engine 1 according to this embodiment is a V-type ten-cylinder engine (V-10 engine) for a motor vehicle, having longitudinally disposed right and left banks 2, 3 in the shape of V, each provided with five cylinders in the longitudinal direction of the vehicle body (vertically in Fig. 5), the cylinders on the left bank 2 being numbered (1)-(5) and the cylinders on the right bank 3 being numbered (6)-(10). In this V-type ten-cylinder engine, ignition for the cylinders is performed in order of cylinder numbers of (1-10-5-7-2-8-3-9-4-6).

In the V-type ten-cylinder engine 1 according to this embodiment, like the first and the second embodiment, a system is adopted in which the whole cylinders are divided into a working cylinder group and a resting cylinder group, exhaust pipes of the cylinders included in each cylinder group are collected together, and downstream of the collected portion are disposed catalysts.

Specifically, the whole cylinders are divided into cylinder groups one for each of the right and left banks 2, 3, that is, a cylinder group of the cylinders (1)-(5) and a cylinder group of the cylinders (6)-(10), and these cylinder groups are rested alternately during low load running. That is, during low load running, fuel supply and ignition are stopped for every other cylinder (cylinder numbers (1), (5), (2), (3), (4) or (10), (7), (8), (9), (6)) in the ignition order of cylinder numbers of (1-10-5-7-2-8-3-9-4-6).

Exhaust pipes from cylinders (1)-(5) on the left bank 2 are collected together to be connected to catalysts 10, 22 on the same cylinder side, and exhaust pipes from cylinders (6)-(10) on the right bank 3 are collected together to be connected to catalysts 11, 25 on the same cylinder side. In Fig. 5, numeral 29 designates an exhaust muffler 29.

Also, in the V-type ten-cylinder engine 1 according to this embodiment, all the exhaust gas discharged from the five cylinders (1)-(5) or (6)-(10) on either one of the right and left banks 2, 3 operated during low load running, are collected and passes through the catalysts 10, 22 or 11, 25 on the related cylinder side. Therefore, temperature decrease and the condition of excessive oxygen of the catalysts 10, 22 or 11, 25 through which the exhaust gas passes, can be prevented, so that these catalysts 10, 22 or 11, 25 fulfill their inherent function sufficiently, providing a high purification efficiency of the exhaust gas. If there is a possibility of over-cooling of the catalyst on the resting cylinder side, a direct injection system may be utilized to inject an adequate amount of fuel into the resting cylinders on the exhaust stroke and to allow fuel (HC) to be reacted in the catalyst so as to maintain the catalyst at a temperature not less than a predetermined value.

In addition, also in this embodiment, a system to stop fuel supply and ignition to the resting cylinders is adopted as the number-of-cylinders controlling system, the same effect as in the first embodiment can be achieved.

### Fourth Embodiment

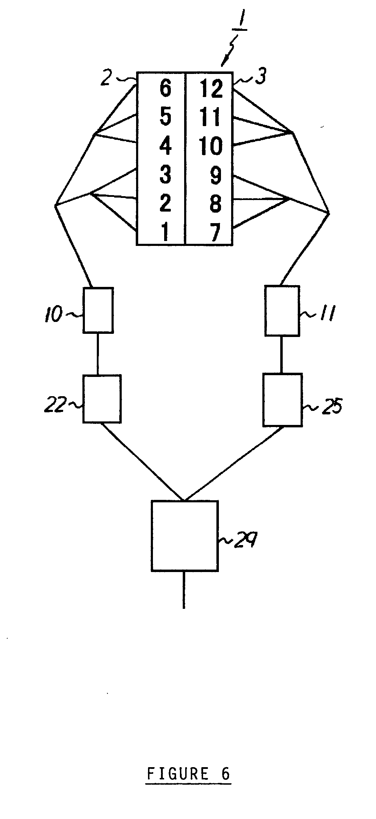

Now, referring to the schematic plan view of Fig. 6, a fourth embodiment will be described.

The number-of-cylinders controlling engine 1 according to this embodiment is a V-type twelve-cylinder engine (V-12 engine) for a motor vehicle, having longitudinally disposed right and left banks 2, 3 in the shape of V, each provided with six cylinders in the longitudinal direction of the vehicle body (vertically in Fig. 6), the cylinders on the left bank 2 being numbered (1)-(6) and the cylinders on the right bank being numbered (7)-(12). In this V-type twelve-cylinder engine 1, ignition for the cylinders is performed in order of cylinder numbers of (1-7-5-11-3-9-6-12-2-8-4-10).

In the V-type twelve-cylinder engine 1 according to this embodiment, like the first, the second and the third embodiment, a system is adopted in which the whole cylinders are divided into a working cylinder group and a resting cylinder group, exhaust pipes of the cylinders included in each cylinder group are collected together, and downstream of the collected portions are disposed catalysts.

Specifically, the whole cylinders are divided into cylinder groups one for each of the right and left banks 2, 3, that is, a cylinder group of the cylinders (1)-(6) and a cylinder group of the cylinders (7)-(12), and these cylinder groups are rested alternately during low load running. That is, during low load running, fuel supply and ignition are stopped for every other cylinder (cylinder numbers (1), (5), (3), (6), (2), (4) or (7), (11), (9), (12), (8), (10)) in the ignition order of cylinder numbers of (1-7-5-11-3-9-6-12-2-8-4-10).

Exhaust pipes from cylinders (1)-(6) on the left bank 2 are collected together to be connected to catalysts 10, 22 on the same cylinder side, and exhaust pipes from cylinders (7)-(12) on the right bank 3 are collected together to be connected to catalysts 11, 25 on the same cylinder side. In Fig. 6, numeral 29 designates an exhaust muffler 29.

Also, in the V-type twelve-cylinder engine 1 according to this embodiment, like the third embodiment, all the exhaust gas discharged from the six cylinders (1)-(6) or (7)-(12) on either one of the right and left banks 2, 3 operated during low load running, are collected and passes through the catalysts 10, 22 or 11, 25 on the related cylinder side. Therefore, temperature decrease and the condition of excessive oxygen of the catalysts 10, 22 or 11, 25 through which the exhaust gas passes, can be prevented, so that these catalysts 10, 22 or 11, 25 fulfill their inherent function sufficiently, providing a high purification efficiency of the exhaust gas.

If in the V-type twelve-cylinder engine 1 according to this embodiment, surge tanks are provided two for each of the right and left banks 2, 3, an electronic throttle is attached to each surge tank, and the electronic throttles on the resting bank side are opened wide, pumping loss of the working cylinders can be reduced, effecting further improvement in the fuel consumption ratio.

In addition, also in this embodiment, a system to stop fuel supply and ignition to the resting cylinders is adopted as the number-of-cylinders controlling system, the same effect as in the first embodiment can be achieved.

As is clear from the foregoing description, the embodiments are teaching a number-of-cylinders controlling engine in which fuel injection by injectors and intake control by an electronic throttle or an ISC are adopted, the number of working cylinders is controlled according to the operating condition, and part of cylinders are rested, said number-of-cylinders controlling engine, wherein a direct injection system is adopted in which fuel is injected directly into cylinders by said injectors, and fuel supply and ignition to the resting cylinders are stopped.

Accordingly, a system to stop fuel supply and ignition to the resting cylinders is adopted, therefore pumping loss of the working cylinders can be kept low, improving the fuel consumption ratio of the whole engine, while simplification of the valve drive mechanism is effected. Also, a direct injection system is adopted as the fuel injection system, so that no fuel sticks on the ports of the resting cylinders, preventing worsening of the exhaust gas characteristic associated with fuel discharge.

According to the embodiments, the whole cylinders are divided into a working cylinder group and a resting cylinder group, exhaust passages of the cylinders included in each cylinder group are collected together, and downstream of the collected portion is disposed a catalyst. Fuel supply and ignition to the resting cylinders are performed for each bank of the V-type multi-cylinder engine.

Accordingly, the hot exhaust gas discharged from all the working cylinders is collected into an exhaust passage and passes through a catalyst, therefore temperature decrease and the condition of excessive oxygen of the catalyst through which the exhaust gas passes, are prevented, so that the catalyst fulfills its inherent function sufficiently, providing a high purification efficiency of the exhaust gas.

According to the embodiments, the working cylinder group and the resting cylinder group are switched alternately.

Accordingly, the working cylinder group and the resting cylinder group are switched alternately, therefore the thermal expansion difference in the whole engine can be eliminated, enhancing durability of the engine. In addition, the working and the resting cylinder group are switched periodically such that the temperature of the catalyst on the resting cylinder side does not fall excessively, thereby preventing the worsening of the exhaust gas characteristic when the resting cylinders are operated.

According to the embodiments, the whole cylinders are operated for a predetermined time after a switching instruction of the working and the resting cylinder group is outputted.

Accordingly, all the cylinders are operated for a predetermined time after a switching instruction of the working and the resting cylinder group is outputted, therefore shocks associated with the torque change at the time of switching can be decreased to a minimum.

The number-of-cylinders controlling engine according to the embodiments is capable of improving the fuel consumption ratio while effecting simplification of a valve drive mechanism as well as prevention of worsening of the exhaust gas characteristic.

The number-of-cylinders controlling engine according to the embodiments is capable of preventing a drop in purification efficiency of the exhaust gas associated with the decreased temperature of catalysts and excessive oxygen.

The embodiments as described above are teaching a multi-cylinder engine comprising a plurality of cylinders 1 to 12, injectors for fuel injection and an electronic throttle C or an idle speed control device ISC for air intake control. A number of operating cylinders of said plurality of cylinders 1 to 12 is controllable according to an operating condition and part of said plurality of cylinders are rested. A direct injection system adapted to directly inject fuel into the cylinders by means of said injectors and a system for stopping fuel supply and ignition to the resting cylinders.

The plurality of cylinders 1 to 12 is divided into at least two groups of cylinders, wherein one cylinder group, an operating cylinder group, is operated and the respective other cylinder group, a resting cylinder group, is rested. Exhaust passages 4 to 7, 12 to 15 of the cylinders included in each of said group of cylinders are collected together, and wherein at least one catalyst 10,11,18,19,22,25,29 is disposed downstream of the collected exhaust portions, respectively.

The embodiments as described above are teaching a V-type multi-cylinder engine, in particular a V-type eight-cylinder, V-type ten-cylinder or V-type twelve-cylinder engine, wherein fuel supply and ignition to the resting cylinders are performed for each bank of the V-type multi-cylinder engine.

The multi-cylinder engine is adapted to alternately switch between said groups of cylinders. The cylinders of the operating cylinder group and the cylinders of the resting cylinder group are interchanged. The cylinders of the operating cylinder group are operated for a predetermined time after a switching instruction of the operating and the resting cylinder group is outputted.

The engine control unit 30 according to an embodiment is adapted to control the electronic throttle C based on an O₂-concentration in an exhaust gas to adjust an amount of intake air and/or to control the number of operating cylinders.

The embodiments as described above are teaching that the operating condition is the low load operating area.

The embodiments as described above are also teaching a method for controlling a number of operating cylinders of a multi-cylinder engine, wherein fuel is injected by injectors and air intake control is performed by an electronic throttle valve C or an idle speed control device ISC, and wherein the number of operating cylinders is controlled according to an operating condition, and part of cylinders are rested. Fuel is injected directly into the cylinders by means of said injectors and fuel supply and ignition to the resting cylinders are stopped.

According to the method of the embodiments exhaust gas of the operating cylinders and exhaust gas of the rested cylinders are independently collected by means of respective exhaust passages and provided to separate catalysts, respectively. The operating cylinders and the rested cylinders are alternately switched, wherein operating cylinders are operated for a predetermined time after a switching instruction of the working and the resting cylinder group is outputted.

## Claims

1. Multi-cylinder engine comprising a plurality of cylinders (1 to 12), injectors for fuel injection and an electronic throttle (C) or an idle speed control device (ISC) for air intake control, wherein a number of operating cylinders of said plurality of cylinders (1 to 12) is controllable according to an operating condition and part of said plurality of cylinders are rested, **characterized by** a direct injection system adapted to directly inject fuel into the cylinders by means of said injectors and a system for stopping fuel supply and ignition to the resting cylinders.

2. Multi-cylinder engine according to claim 1, **characterized in that** the plurality of cylinders (1 to 12) is divided into at least two groups of cylinders, wherein one cylinder group, an operating cylinder group, is operated and the respective other cylinder group, a resting cylinder group, is rested, wherein exhaust passages (4 to 7, 12 to 15) of the cylinders included in each of said group of cylinders are collected together, and wherein at least one catalyst (10,11,18,19,22,25,29) is disposed downstream of the collected exhaust portions, respectively.

3. Multi-cylinder engine according to claim 1 or 2, **characterized by** a V-type multi-cylinder engine, in particular a V-type eight-cylinder, V-type ten-cylinder or V-type twelve-cylinder engine, wherein fuel supply and ignition to the resting cylinders are performed for each bank of the V-type multi-cylinder engine.

4. Multi-cylinder engine according to claim 2 or 3, **characterized in that** the multi-cylinder engine is adapted to alternately switch between said groups of cylinders, wherein the cylinders of the operating cylinder group and the cylinders of the resting cylinder group are interchanged.

5. Multi-cylinder engine according to claim 4, **characterized in that** the cylinders of the operating cylinder group are operated for a predetermined time after a switching instruction of the operating and the resting cylinder group is outputted.

6. Multi-cylinder engine according to at least one of the preceding claims 1 to 5, **characterized by** a engine control unit (30), wherein said engine control unit (30) is adapted to control the electronic throttle (C) based on an O₂-concentration in an exhaust gas to adjust an amount of intake air and/or to control the number of operating cylinders.

7. Multi-cylinder engine according to at least one of the preceding claims 1 to 6, **characterized in that** the operating condition is the low load operating area.

8. Method for controlling a number of operating cylinders of a multi-cylinder engine, wherein fuel is injected by injectors and air intake control is performed by an electronic throttle valve (C) or an idle speed control device (ISC), and wherein the number of operating cylinders is controlled according to an operating condition, and part of cylinders are rested, **characterized in that** fuel is injected directly into the cylinders by means of said injectors and fuel supply and ignition to the resting cylinders are stopped.

9. Method for controlling a number of operating cylinders of a multi-cylinder engine according to claim 8, **characterized in that** exhaust gas of the operating cylinders and exhaust gas of the rested cylinders are independently collected by means of respective exhaust passages and provided to separate catalysts, respectively.

10. Method for controlling a number of operating cylinders of a multi-cylinder engine according to claims 8 or 9, **characterized in that** the operating cylinders and the rested cylinders are alternately switched, wherein operating cylinders are operated for a predetermined time after a switching instruction of the working and the resting cylinder group is outputted.
